# EUROPEAN PATENT APPLICATION

(11) **EP 1 261 190 A2**
(43) Date of publication of application: **27.11.2002**
(21) Application number: 02010106.9
(22) Date of filing: 08.05.2002
(51) Int. Cl.: H04M 3/533

(54) **Voice mail apparatus and asscociated method**

(30) Priority: 26.05.2001 US 866338
(71) Applicant: ALCATEL, 75008 Paris (FR)
(72) Inventor: Watts, Ronald Franklin, Lewisville, Texas 75077 (US)
(74) Representative: Dreiss, Fuhlendorf, Steimle & Becker

(57) **Abstract**

Apparatus, and an associated method, by which to record and provide a voice mail message to a receiving party. A media server is provided and connected to a packet data network through which a call originated at a calling station is rerouted upon unsuccessful call termination at an intended receiving station. The calling party leaves a message at a message recorder, and the message is saved as a digitized file-formatted file. The file is attached to an email message which is forwarded, by way of the packet data network, to a destination at which the receiving party is later able to retrieve the email message and the file attached thereto.

## Description

The present invention relates generally to a manner by which to deliver a voice mail message recorded pursuant, e.g., to an unsuccessful call termination at a receiving station. More particularly, the present invention relates to apparatus, and an associated method, by which to record the message and to deliver the recorded message to a selected packet network station. The voice mail message is recorded at a media server coupled to a packet data network and is forwarded as an attachment to an e-mail, or other packet data message, to a desired location, to be accessible thereat. Storage limitations associated with conventional voice mail systems are obviated. And, long distance charges sometimes necessitated when accessing voice mail messages saved by conventional voice mail systems are avoidable through operation of an embodiment of the present invention.

### BACKGROUND OF THE INVENTION

Telephonic communication of voice, as well as nonvoice, data is a necessary adjunct of modern society. To permit the effectuation of the telephonic communication, telephonic communication networks have been installed throughout significant portions of the world. A subscriber to, or other user of, the telephonic network communicates therethrough through the use of a subscriber unit, such as a conventional telephonic apparatus having a telephonic keypad and a telephonic handset.

Operating companies which operate the telephonic communication networks provide for additional service features for which subscribers and users of the communication networks can subscribe for usage thereof. Such additional service features generally increase the convenience of usage of, and provide additional services facilitating usage of, the communication networks.

Voice mail service is exemplary of an additional service feature sometimes offered by an operator of a telephonic network. Voice mail service permits a calling party who originates a call at a calling station for termination at a receiving station to leave a voice, or other, message when the call cannot be successfully terminated at the receiving station.

The call may be unsuccessful, due, for example, to the unavailability of a receiving party at the receiving station to answer, or otherwise accept, the call. Or, the receiving station might be in use pursuant to another call, thereby preventing termination of the subsequent call at the receiving station.

When a service subscription is purchased for the receiving station, the call which is unable to be terminated at the receiving station is routed to a voice mail system. The call is terminated at the voice mail system, and the calling the party is able to leave a message for subsequent retrieval by the receiving party.

Conventionally, a telephonic service provider utilizes a voice mail system which is shared amongst a large number of subscribers to the service. Each subscriber is permitted a certain number of messages, or a certain maximum time period of messages, or a combination of the two, to be stored at the voice mail system. When the maximum allowable storage of voice mail messages, additional messages cannot be stored at the voice mail system.

Even if the memory capacity of the voice mail system is not exceeded, thereby to prevent storage of any additional messages, other problems are exhibited by conventional voice mail systems. For instance, a large quantity of messages might be stored at the voice mail system, related to a signal receiving station and an intended receiving party associated with receiving station. The voice mail messages are typically stored in order of the time of their delivery and, correspondingly, must be retrieved in the same order. The requirement that all of the messages be retrieved sequentially can be inconvenient.

Additionally, accessing the messages through actuation of a telephonic key pad can be inconvenient. For the receiving party to retrieve, and listen to, the stored voice mail messages, the retrieving party enters a dialing code, at the receiving station, or other telephonic station, and enters dialing digits associated with the voice mail system. That is to say, to access the voice mail messages stored at the voice mail system, the receiving party must call the voice mail server using a conventional telephonic station. Once a telephonic connection is formed with the voice mail system, the receiving party typically must further enter, through a telephonic keypad, appropriate codes to access, and to listen to, the stored voice mail messages. The required actuation of the actuation keys can sometimes become perplexingly lengthy. That is to say, sometimes a complex touch tone entry methodology is required of the receiving party to permit the receiving party to access and listen to the stored voice mail messages.

Also, calling charges sometimes accrue when accessing conventional voice mail systems. The receiving party accesses the voice mail system by way of a conventional, telephonic network. Charges normally associated with placing a conventional telephonic call in a public, telephonic network accrue. If the call accrues long distance charges, retrieval of the voice messages necessitates payment of such charges. While U.S. Patent No. 6,085,231 discloses a scheme in which retrieval of the voice mail messages is effectuated by way of the internet, thereby avoiding the accrual of long distance charges, other problems generally associated with conventional voice mail systems are not addressed. For instance, messages are stored at a conventional voice mail station, and the conventional voice mail station exhibit some of the problems noted above.

Therefore, an improved manner by which to store, and to permit subsequent retrieval of, voice mail messages would be advantageous.

It is in light of this background information related to the voice mail systems utilized in telephonic networks that the significant improvements of the present invention have evolved.

### SUMMARY OF THE INVENTION

The present invention, accordingly, provides apparatus, and an associated method, by which to deliver a voice mail message recorded pursuant to an unsuccessful call termination at a receiving station.

Through operation of an embodiment of the present invention, a voice mail message is recorded and delivered to a selected packet network station. The voice mail message is recorded at a media server coupled to a packet data network. Subsequent to recordation at the media server, the message is forwarded as an attachment to an e-mail, or other packet data message, to a desired location.

The packet data message and the attachment thereto is accessible by the receiving party thereat. Storage limitations which limit the number, or length, of voice mail messages storable at a voice mail system are unlikely to limit storage of voice mail messages at the voice mail media server.

Additionally, because access by a receiving party to the messages are made by way of a packet data network, such as the internet backbone, long distance charges which sometimes accrue when a receiving party is required to access a voice mail system by way of a conventional telephonic network are also obviated.

Improved user interface capability also facilitates retrieval of a voice mail message by a receiving party. The conventional need to enter a complex methodology of touchtone, or other dialing, digits is obviated. And, sorting functions can be performed upon the stored messages, thereby to obviate the need of the retrieving party to sequence through every voice mail message, in sequence, to retrieve a selected voice mail message.

In one aspect of the present invention, apparatus is provided for a media server, or other packet-network device. The media server, or other device, is connected to a communication fabric which includes a packet data network forming at least a portion thereof. When a call placed at a calling station by a calling party is unsuccessfully terminated at a receiving station, the call is rerouted to the media server. If the call is initiated in a circuit-switched network, the call is routed through a gateway through the packet data network portion of the communication fabric.

When the calling party leaves the voice mail message, the message is stored as a digitized file-formatted data file, such as a .wav, or MP3, file. The digitized, file-formatted data file is attached to an e-mail message, or other packet data message, and forwarded, by way of the packet data network portion of the communication fabric to a packet-data network station, such as an e-mail server. The e-mail, or other packet data, message is retrievable by the receiving party. And, the attachment is opened by the receiving party to listen to the voice mail message.

In another aspect of the present invention, a database is maintained at the media server in which indicia which identifies the receiving station is indexed together with one, or more, addresses to which the packet data message and the digitized file-formatted file attached thereto is, or are, to be forwarded.

The address to which the packet data message and attached file are forwarded, in one implementation, forms an e-mail address which identifies an e-mail server. The e-mail server forms a store-and-forward device capable of delivering the e-mail to the receiving party when the receiving party is operating a computer station which is connected to the internet, or other packet data, backbone.

In one implementation, the database maintained at the media server is updateable by the receiving party through actuation of the computer station at which the receiving party is positioned. Alternate, or additional, addresses at which to forward the packet data message and the file attached thereto are selectable by the receiving party.

Because the messages are accessible by way of the packet data network, long distance charges which might otherwise be require to access the voice mail messages are obviated. And, because the addresses to which the messages formed at the media server are forwardable can be altered, as desired, dynamic routing of the voice mail messages is provided.

In another aspect of the present invention, an application server is also provided. At the application server, a user profile database is maintained. The database includes indicia identifying the media server together with indicia identifying the receiving station. When a call originated by the calling party is unsuccessfully terminated at the receiving station, inquiries made of the user profile database at the application server of the identity of the media server to which the call should be rerouted. Upon retrieval of the identity indicia, the call is routed to the media server to permit the calling party to leave the voice message at the media server.

In these and other aspects, therefore, apparatus, and an associated method, is provided for a communication system, in which a call originated by a calling party at a call origination station to be terminated at a receiving station is rerouted upon unsuccessful call termination at the receiving station. A message left by the calling party is recorded. The message is subsequently accessible at a packet data network station. A message recorder is positioned to receive the call upon rerouting subsequent to unsuccessful call termination at the receiving station. The message recorder records the message left by the calling party. The message recorded by the message recorder forms a digitized file formatted data file. A packet data message generator is coupled to the message recorder. The message generator receives the digitized file formatted data file recorded by the message recorder. The packet data message generator generates a packet data message to which the digitized file formatted file is attached. The packet data message is forwardable to at least a first receiving station selected address.

A more complete appreciation of the present invention and to the scope thereof can be obtained from the accompanying drawings which are briefly summarized below, the following detailed description of the presently-preferred embodiments of the invention and the appended claims.

### BRIEF DESCRIPTION OF THE DRAWINGS

Figure 1 illustrates a functional block diagram of a communication system in which an embodiment of the present invention forms a portion.
Figure 2 illustrates a representation of a database generated during operation of, and forms a portion of, an embodiment of the present invention.
Figure 3 illustrates a message sequence diagram representative of exemplary signaling generated during operation of an embodiment of the present invention embodied in the communication system shown in Figure 1.
Figure 4 illustrates a method flow diagram listing the method steps of the method of operation of an embodiment of the present invention.

### DETAILED DESCRIPTION OF THE INVENTION

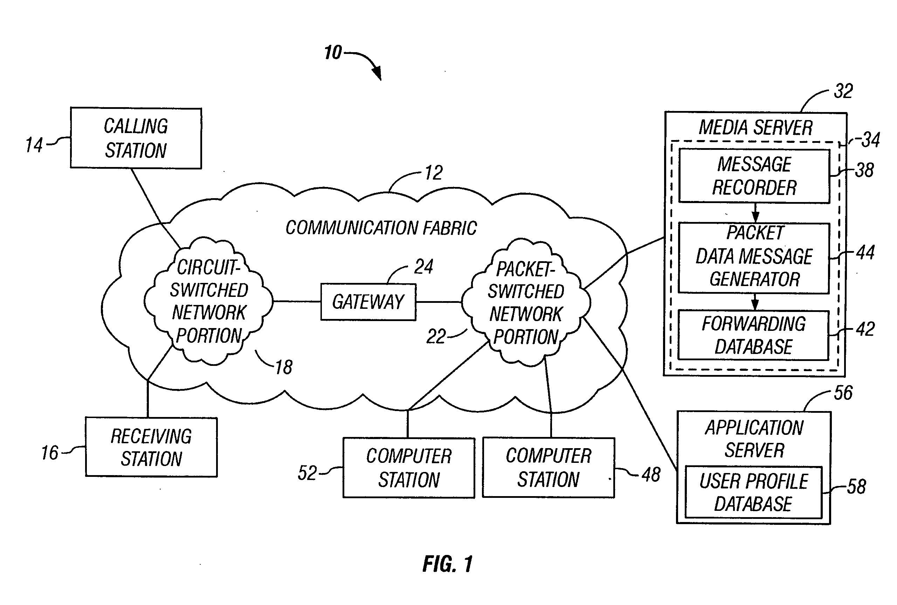

Referring first to Figure 1, a communication system 10, shown generally at 10, provides for communications between communication stations coupled to a communication fabric 12. Telephonic communications are effectuated between the communication stations coupled to the communication fabric.

In the exemplary illustration of the figure, two of such communication stations are shown. A calling station 14 and a receiving station 16 are shown. Telephonic communications of both voice and nonvoice data are effectuable between the calling and receiving stations 14 and 16. Here, the calling station is representative of a communication station at which a call is originated by a calling party. And, the receiving station 16 is representative of a communication station at which the call is intended to be terminated.

When the call originated at the calling station is successfully terminated at the receiving station, conventional telephonic communications are effectuated therebetween. The calling and receiving stations are representative of any type of communication station through which telephonic communications are effectuable. Such communication stations include, in addition to conventional wireline telephonic devices, mobile stations operable in cellular, and other radio communication systems. When one, or both, of the calling and receiving stations form mobile stations, the communication fabric radio access network portions which form radio links with the appropriate communication stations to complete the call between the calling and receiving stations.

The communication fabric is here shown to include a circuit switched network portion 18 and a packet switched network portion 22. The portions 18 and 22 are connected by way of a gateway 24. The calling and receiving stations 14 and 16 are coupled to the circuit-switched network portion. And, pursuant to operation of the circuit-switched network portion, formation of a circuit-switched connection is attempted to be formed between the calling and receiving station.

The call to the receiving station is initiated by the calling party at the calling station by entering dialing digits associated with the receiving station, in conventional manner. If a receiving at the receiving station is available to receive the call, the circuit-switched connection is formed between the calling station and receiving station in conventional manner. For instance, when the receiving station forms a conventional telephonic station, the telephonic station is taken "off-hook" in conventional manner.

If the receiving party is unavailable to take the telephonic station off-hook, or otherwise fails to cause effectuation of actions required to terminate the call at the receiving station, the calling party is unable to effectuate the communications with the receiving party at the receiving station. As noted above, communication system operators sometimes make available voice mail services, typically pursuant to a service subscription, to permit the calling party to leave a voice mail message for subsequent retrieval by the receiving party. Also, as noted above, conventional voice mail systems conventionally provided by communication system operators exhibit the various problems, such as limitations on the number, or length, of voice mail messages which can be stored, requirements that relatively complex touchtone entry methodologies to be carried out by a receiving party to access stored voice mail messages, and the accrual of calling charges sometimes required to access the voice mail messages.

The communication system 10 includes a media server 32 of an embodiment of the present invention. The media server is coupled to the packet-switched network portion 22. The packet-switched network portion includes a packet data backbone, such as the internet backbone. The media server includes apparatus 34 of an embodiment of the present invention. The elements forming the apparatus 34 are functionally represented, and can be implemented in any desired manner. In the exemplary implementation, the elements are, at least in part, software-implementations formed of algorithms executed by processing circuitry located the media server. In other implementations, the elements are implemented in other manners.

The apparatus includes a message recorder 38. Upon unsuccessful termination of the call at the receiving station, the communication fabric reroutes the call to the media server. Upon rerouting to the media server, the call is terminated thereat. The message recorder 38 is operable to record a message which is delivered by the calling party located at the calling station. The message is recorded in the form of a digitized, file-formatted data file. Recording, and compression, is performed to form, for instance, a .wav, or .MP3, file. Other types of conventional, and other, file formats can analogously be used to format the file in a desired format. When the calling party completes delivery of the message, the call is terminated. While not separately illustrated, the message recorder includes, or is coupled to, a computer mass storage device at which the message is stored.

The apparatus 34 further includes a forwarding database 42. The forwarding database includes entries in which indicia identifying receiving stations, such as the receiving station 16, and indicia identifying forwarding addresses to which messages recorded by the message recorder are to be forwarded are indexed together. Indexed together with the indicia identifying a signal receiving station are as many forwarding addresses as a receiving party might desire to have the messages forwarded.

The apparatus here further includes a packet data message generator, functionally connected to the message recorder and the forwarding database. The packet data message generator forms an e-mail message, or other packet data message, addressed to the address, or addresses retrieved from the forwarding database. And, the file created by the message recorder is attached to the e-mail, or other packet data, message. And, the packet data message generator sends the e-mail, or other message, generated thereat by way of the packet-switched network portion to be routed to the device, or devices, to which the e-mail, or other message is addressed. Here, two computer stations, a computer station 48 and a computer station 52, are representative of packet data stations at which the email, or other message are forwarded. While not separately shown, forwarding is effected, for instance, by way of an e-mail server, or other store and forward device, to be retrieved therefrom when a receiving party operates a selected one of the computer stations. Because the messages are forwarded as email, or other, messages to a computer station, normal sorting and categorizing operations can be performed at the computer station to rearrange the messages according to a desired sorting scheme, or otherwise to permit nonsequential viewing of the messages by the receiving party.

An application server 56 is further shown in the figure. The application server includes a user profile database which stores indicia identifying the message recorder 38, such as by indicia which identifies the media server 32, together with indicia identifying the receiving station 16. The application server is operable during rerouting operations by which the unsuccessfully terminated call originated at the calling station 14 is to be rerouted. Access to the user profile database indicates the address of the location at which the message recorder 38 is positioned.

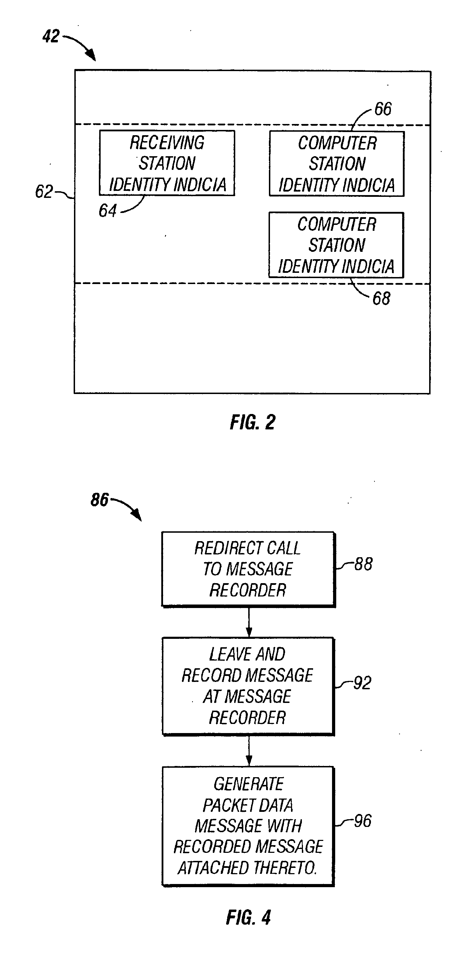

Figure 2 illustrates the forwarding database 42 which forms the portion of the apparatus 34 located at the media server 32 of the communication system shown in Figure 1. The database 42 illustrates an exemplary entry 62. The entry includes indicia 64 identifying the receiving station 16 (shown in Figure 1). Indexed together with the receiving station identity indicia are indicia 66 and 68 identifying the addresses of the computer stations 48 and 52 (shown in Figure 1). Again, the indicia identifying the computer stations 48 and 52 are, in one implementation, identities identifying e-mail servers or other store and forward devices.

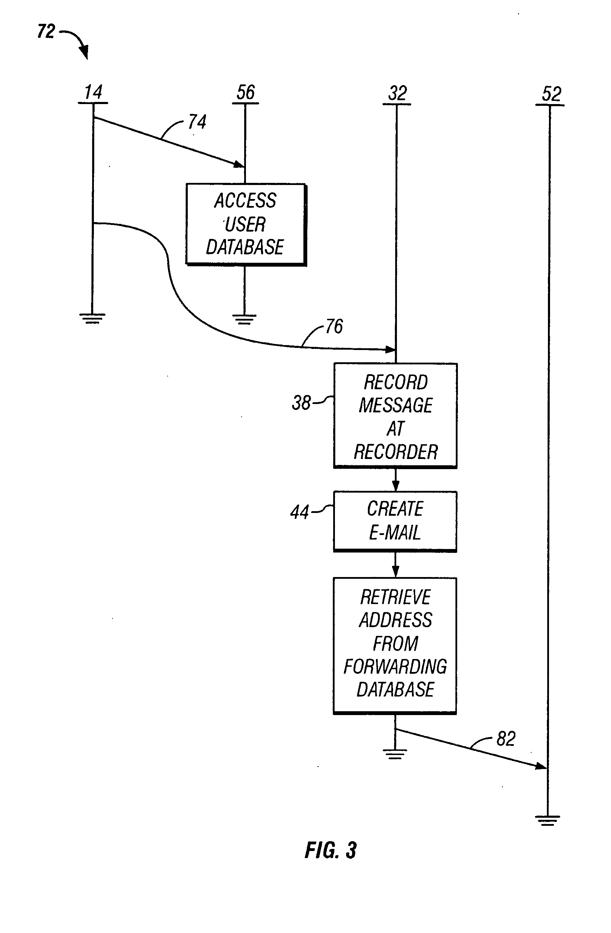

Figure 3 illustrates a message sequence diagram, shown generally at 72, representative of signaling generated during exemplary operation of the communication system 10 (shown in Figure 1).

When a calling party located at the calling station initiates a call to a receiving station, the communication fabric routes the call thereto to attempt to terminate the call at the receiving station. If the call is unable to be terminated, access is made of the user profile database 58 positioned at the application server 56. The call is thereafter rerouted to the media server 32 at which the message recorder is located. Call initiation, and access to the access server 56 is indicated by the segment 74, and the communication path formed between the calling station and the media server is indicated by the path 76. Once the call is successfully terminated at the media server, a message is left by the calling party, and the message is recorded at the message recorder 38. Then, the e-mail, or other message is created by the generator 44. The address is retrieved from the database 42.

Then, and as indicated by the segment 82, the messages forwarded to a computer station, here the computer station 52. The message is routed to the computer station by way of the packet data network, and can be routed thereto by way of store and forward device, such as an email server. Thereafter, the receiving party is able to access the message and the attachment thereto.

Figure 4 illustrate a method, shown generally at 86. The method provides for recording of a message left by a calling party who unsuccessfully attempts to terminate at call at a receiving station. Once the message is left, the message is subsequently accessible at a packet data network station.

First, and as indicated by the block 88, the call is redirected to a message recorder upon the unsuccessful call termination at the receiving station. Then, and as indicated by the block 92, a message is left by the calling party and recorded at a message recorder. The message is recorded as a digitized file-formatted data packet.

Then, and as indicated by the block 96, a packet data message is generated, and the digitized file-formatted file is attached thereto. The packet data message is forwardable to at least a first receiving station.

Thereby a manner is provided by which to record a voice mail message and deliver the recorded message to a selected packet network station. Storage limitations at a conventional voice mail system as well as long distances charges sometimes accruing when the message is retrieved are obviated through use of an embodiment of the present invention.

The previous descriptions are of preferred examples for implementing the invention, and the scope of the invention should not necessarily be limited by this description. The scope of the present invention is defined by the following claims.

## Claims

1. In a communication system in which a call, originated by a calling party at a call-origination station, to be terminated at a receiving station is rerouted upon unsuccessful call-termination at the receiving station, an improvement of apparatus for recording a message left by the calling party, the message subsequently accessible at a packet data network station, said apparatus comprising:
a message recorder to which the call originated at the call-origination station is rerouted upon the unsuccessful call-termination of the call at the receiving station, said message recorder for recording the message left by the calling party, the message recorded by said message recorder forming a digitized file-formatted data file;
a packet-data message generator coupled to said message recorder to receive the digitized file-formatted data file recorded by said message recorder, said pocket-data message generator for generating a packet-data message to which the digitized file-formatted file is attached, the packet-data message forwardable to at least a first receiving-station selected address.

2. The apparatus of claim 1 wherein the communication system comprises a communication fabric to which the call-origination station, the receiving station, and said message recorder are coupled to the communication fabric, the call originated at the call-origination station routed through the communication fabric to said message recorder upon the unsuccessful call-termination of the call at the receiving station.

3. The apparatus of claim 2 wherein at least a portion of the communication fabric comprises a packet data network, wherein the packet data network station is coupled to the packet data network, and wherein said message recorder and said packet-data message generator are further coupled to the packet data network, the call, upon termination at said message recorder, in digital form.

4. The apparatus of claim 3 wherein a portion of the communication fabric comprises a circuit-switched network, wherein the call-origination station is coupled to the circuit-switched network, and wherein the call forms a packet-switched communication, in the digital form, upon termination at said message recorder.

5. The apparatus of claim 4 wherein a first media server is coupled to the packet data network and wherein said message recorder and said packet-data message generator are embodied at the first media server.

6. The apparatus of claim 1 wherein the at least the first receiving-station selected address comprises a plurality of receiving-station selected addresses, the digitized file-formatted file attached to the packet-data message forwardable to all of the plurality of receiving-station selected addresses.

7. The apparatus of claim 1 further comprising a forwarding database accessible by said packet-data message generator, said forwarding database including indicia identifying the at least the first receiving-station selected address indexed together with indicia identifying the receiving station.

8. The apparatus of claim 7 wherein said packet-data message generator accesses said forwarding database to address the digitized file-formatted file with the indicia identifying the at least the first receiving-station selected address.

9. The apparatus of claim 8 wherein storage of the indicia of the at least the first receiving station address is initiated by a permitted user of the receiving station.

10. The apparatus of claim 9 wherein said initiation of the storage of the indicia of the at least the first receiving station is effectuated by way of the receiving station.

11. The apparatus of claim 9 wherein initiation of the storage of the indicia of the at least the first receiving station is effectuated by way of the packet data network station.

12. The apparatus of claim 1 wherein the at least the first receiving-station selected address identifies the packet data network station.

13. In the communication system of claim 1, a further improvement of apparatus for initiating rerouting of the call to said message recorder, said apparatus comprising:
a user profile database having indicia identifying said message recorder indexed together with indicia identifying the receiving station.

14. The apparatus of claim 13 wherein the communication system comprises a communication fabric to which the call-origination station and the receiving station are coupled, wherein a first application server is coupled to the communication fabric, and wherein said user profile database is embodied at the application server.

15. The apparatus of claim 14 further comprising an availability determiner operable responsive to identification of the indicia identifying said message recorder through access of said user profile database, said availability determiner for determining whether said message recorder is available to receive the call if rerouted thereto.

16. In a method for communicating in a communication system in which a call originated by a calling party at a call-origination station to be terminated at a receiving station is rerouted upon unsuccessful call-termination at the receiving station, an improvement of a method for recording a message left by the calling party, the message subsequently accessible at a packet data network station, said method comprising:
redirecting the call to a message recorder upon the unsuccessful call-termination of the call at the receiving station;
recording the message left by the calling party at the message recorder, the message forming a digitized file-formatted data packet;
generating a packet-data message to which the digitized file-formatted file is attached, the packet-data message forwardable to at least a first receiving-station address.

17. The method of claim 16 wherein the communication system comprises a communication fabric to which the call origination station, the receiving station, and the message recorder are coupled, at least a portion of the communication fabric comprising a packet data network, and wherein the call, redirected to the message recorder during said operation of redirecting, is delivered to the message recorder in digital form.

18. The method of claim 16 wherein the at least the first receiving-station address to which the packet-data message generated during said operation of generating is forwardable comprises a plurality of receiving-station selected addresses.

19. The method of claim 18 further comprising the operation of forwarding the packet-data message to the plurality of receiving-station selected addresses.

20. In a media server coupled to communication fabric of a communication system, an improvement of apparatus for recording a message left by a calling party, the message receivable by a receiving party, said apparatus comprising:
a message recorder to which the call originated by the call-origination station is rerouted upon the unsuccessful call-termination of the call at the receiving party, said message recorder for recording the message left by the calling party, the message recorded by said message recorder forming a digitized file-formatted data file;
a packet-data message generator coupled to said message recorder to receive the digitized file-formatted data file recorded by said message recorder, said packet-data message generator for generating a packet-data message to which the digitized file-formatted file is attached, the packet-data message forwardable to at least a first receiving-station selected address; and
a packet-data message transmitter coupled to receive the packet-data message generated by said packet-data message generator, said packet-data message transmitter for transmitting the packet-data message to the at least the first receiving-station selected address.
